Europäisches Patentamt

European Patent Office

Office européen des brevets

(19)

(11) **EP 1 130 867 A2**

(12) **EUROPÄISCHE PATENTANMELDUNG**

(43) Veröffentlichungstag:
**05.09.2001 Patentblatt 2001/36**

(51) Int Cl.$^7$: **H04L 27/233**, H04L 1/20

(21) Anmeldenummer: **01200654.0**

(22) Anmeldetag: **22.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **29.02.2000 DE 10009443**

(71) Anmelder:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Petersen, Jürgen, c/o Philips Corporate 52064 Aachen (DE)**
• **Wagner, Thomas, c/o Philips Corporate 52064 Aachen (DE)**

(74) Vertreter: **Gössmann, Klemens et al Philips Corporate Intellectual Property GmbH Habsburgerallee 11 52064 Aachen (DE)**

(54) **Empfänger und Verfahren zum Detektieren und Dekodieren eines DQPSK-modulierten und kanalkodierten Empfangssignals**

(57)    Die Erfindung betrifft ein Übertragungssystem, einen Empfänger und ein Verfahren zum Empfangen eines DQPSK-modulierten und zusätzlich kanalkodierten Empfangssignals. Nach dem Empfang wird das Empfangssignal nach dem Prinzip der inkohärenten differentiellen Detektion demoduliert und unter Berücksichtigung von Zuverlässigkeitswerten kanaldekodiert. Gemäß der Erfindung wird die Kanaldekodierung dadurch verbessert, dass die verbesserten Zuverlässigkeitswerte auf einer auf der Rauschleistung des Empfangssignals basierenden Bezugsgröße normiert sind.

FIG. 1

**Beschreibung**

Empfänger und Verfahren zum Detektieren und Dekodieren eines DQPSK-modulierten und kanalkodierten Empfangssignals gemäß dem Oberbegriff des Vorrichtungsanspruchs 1 und dem Oberbegriff des Verfahrensanspruchs 4

Aus dem Stand der Technik sind Übertragungssysteme, insbesondere Mobilfunksysteme, welche als Modulationsverfahren die differentielle quaternäre Phasenumtastung DQPSK verwenden, bekannt. Beispiele sind das US-amerikanische Mobilfunksystem IS-136 oder das japanische PDC-System.

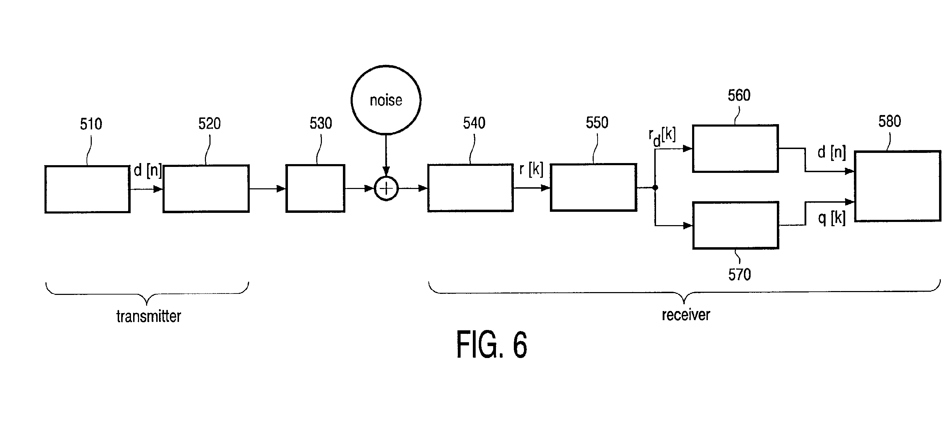

Der grundsätzliche Aufbau eines derartigen Übertragungssystems ist in Fig. 6 dargestellt. Senderseitig erzeugt ein Bitgenerator 510 binäre Informationssymbole d [n], welche nachfolgend von einem DQPSK-Modulator 520 moduliert werden. Die modulierten Informationssignale werden über einen Übertragungskanal 530, in der Regel ein Mobilfunkkanal, transferiert. Bei der Übertragung über den Kanal 530 werden die modulierten Informationssymbole z. B. durch additives Weißes Gauß'sches Rauschen gestört.

Die derartig gestörten Informationssymbole werden von einem Empfänger empfangen und dort zunächst von einem Empfangsfilter 540 gefiltert. Die Demodulation der DQPSK-modulierten empfangenen Informationssymbole erfolgt in dem Empfänger nach dem Verfahren der sog. differentiellen Detektion. Gemäß diesem Verfahren werden die am Ausgang des Empfangsfilters 540 anstehenden abgetasteten aktuellen Signalwerte r[k] einem Phasendetektor 550 zugeführt, welcher die Phasendifferenz zwischen jeweils zwei im Symbolabstand Ts benachbarten Signalwerten bildet. Die Bildung der Phasendifferenz erfolgt üblicherweise durch Multiplikation des aktuellen Signalwertes r[k] mit dem konjugiert komplexen vorangegangenen Signalwert $r^*$[k-1]. Das Ergebnis dieser Multiplikation wird von dem Phasendetektor 550 als sog. differenzierter Signalwert rd [k] mit rd[k] = r[k] · $r^*$[k-1] ausgegeben, welcher den Phasenwinkel zwischen den zu den Zeitpunkten k-1 und k abgetasteten Signalwerten repräsentiert.

Die Rekonstruktion, d.h. die Detektion des ursprünglich ausgesendeten binären Informationssymbols in dem Empfangssignal erfolgt in einer dem Phasendetektor 550 nachgeschalteten Detektionseinrichtung 560. Diese detektiert ein Informationssymbol d[n] nach dem Prinzip der differentiellen Detektion auf Basis des von dem Phasendetektor 550 bereitgestellten differenzierten Signalwertes rd[k]. Die Detektionseinrichtung stellt das detektierte, d.h. demodulierte, aber noch kanalkodierte, Informationssymbol d[n] an seinem Ausgang bereit.

Besonders einfach gestaltet sich die Detektion, wenn die binären Informationssymbole bei ihrer Modulation im Sender gemäß der Gray-Kodiervorschrift auf Quaternärsymbole, d.h. auf Phasendifferenzwerte abgebildet worden sind, wobei in jedem Symboltakt eine konstante Phasendrehung von π/4 auf die Phasendifferenzwerte addiert worden ist. Dieses spezielle Modulationsverfahren heißt π/4-DQPSK-Modulation und führt zu den in Tabelle 1 gezeigten Zuordnungen zwischen binären Informationssymbolen und Phasendifferenzwerten.

Tabelle 1:

| Binäre Informationssymbole | Phasendifferenzwerte |
|---|---|
| 0 0 | 0°+45° = 45° |
| 0 1 | +90°+45° = 135° |
| 1 0 | -90°+45° = -45° |
| 1 1 | -180°+45° = -135° |

In dem Fall einer derartigen π/4-DQPSK-Modulation im Sender können die binären Informationssymbole im Empfänger unmittelbar aus reellwertigen Vergleichen mit einem Schwellenwert 0 ermittelt werden. Ein Vergleich des Inphase-Signalwertes, d.h. des Realteils, liefert ein niederwertiges Bit der binären Informationssymbole, während ein Vergleich des Quadratursignalwertes, d.h. des Imaginärteils, mit dem Schwellenwert 0 das höherwertige Bit des binären Informationssignals liefert. Liegen die Phasendifferenz-Sollwerte aufgrund der Modulationsvorschrift nicht auf den ± 45°-Achsen, so können sie durch eine konstante Phasendrehung (z.B. durch komplexe Multiplikation) in die richtige Lage gebracht werden.

Die bisher beschriebene differentielle Detektion von Empfangssignalen in einem Empfänger dient lediglich zur Demodulation von in dem Sender nach dem DQPSK-Modulationsverfahren modulierten Informationssymbolen.

Häufig werden jedoch die Informationssymbole in einem Sender zusätzlich durch Fehler korrigierende Codes kodiert, um auf diese Weise zusätzlich gegen Verfälschung geschützt zu sein. In digitalen Mobilfünk- und Satellitensystemen ist es Stand der Technik, Faltungscodes zur Fehlerkorrektur einzusetzen. Für die Faltungscodes existieren effiziente Dekodierverfahren, die neben den empfangenen binären Eingabesymbolen zusätzlich sog. Zuverlässigkeitswerte (Soft-Decision-Werte), die den Eingabesymbolen zugeordnet sind, bei der Dekodierung (z.B. mit Hilfe des Viterbi-Algorithmus) gewinnbringend ausnutzen können.

Die Zuverlässigkeitswerte sind ein Maß dafür, inwieweit die im Empfänger getroffenen binären oder harten Entscheidungen tatsächlich den Pegel eines in dem Sender erzeugten binären Informationssymbols repräsentieren.

Für das beschriebene Verfahren der differentiellen Detektion ist es z.B. aus dem Buch "Nachrichtenübertragung" von K.D. Kammeyer, Teubner Verlag, Stuttgart, 1992, bekannt, Zuverlässigkeitswerte auf Basis des Real- und Imaginärteils des differenzierten Signalwertes rd[k] zu berechnen. Diese Zuverlässigkeitswerte lauten dann q[2k] = |Re(rd[k])| und q[2k+1] = |Im(rd[k])|.

Derartig berechnete Zuverlässigkeitswerte erweisen sich in der Praxis nur dann als brauchbar, wenn die Rauschleistung des Empfangssignals über hinreichend große Zeitintervalle, die durch die Codewortlänge der Kanalkodierung und verwendetes Interleaving bestimmt werden, als annähernd konstant betrachtet werden kann. Diese Voraussetzung ist allerdings insbesondere bei Mobilfunksystemen mit Zeitmultiplex TDMA-Zugriffsverfahren nicht erfüllt. Hier ändern sich die Empfangspegel, insbesondere bei Mehrwegeausbreitung auf dem Funkweg in jedem Zeitschlitz, was der Empfänger durch eine eingebaute automatische Verstärkungsregelung (Automatic Gain Control: AGC) wieder auszugleichen versucht. Dieser Ausgleich ist erforderlich, um den in digitalen Empfängern in der Regel vorhandenen Analogdigitalwandler (Analag-Digital-Converter: ADC) immer möglichst optimal auszusteuern. Die unterschiedlichen Verstärkungswerte führen wiederum zu sich ändernden Rauschleistungen in den Zeitschlitzen, was eine unterschiedliche Skalierung der Zuverlässigkeitswerte nach sich zieht. In Verbindung mit Interleaving, wonach binäre Informationssymbole d[k] und ihnen zugeordnete Zuverlässigkeitswerte q[k] aus verschiedenen Zeitschlitzen zu einem Codewort gehören, führt die unterschiedliche Skalierung der Zuverlässigkeitswerte zwangsläufig zu einer Degradation in einer Kanal-Dekodiereinrichtung des Empfängers. Weiterhin führt die unterschiedliche Skalierung zu Problemen bei der Quantisierung der Zuverlässigkeitswerte, wenn deren Variationsbereich jeweils durch eine ausreichend große Stufenzahl dargestellt werden soll.

Die Notwendigkeit einer Skalierung der Zuverlässigkeitswerte ist z.B. für das bestimmte Detektionsverfahren der kohärenten Maximum-Likelihood-Sequenz-Estimation MLSE-Detektion bekannt, siehe dazu die Veröffentlichung des Artikels "Soft-Output MLSE for IS-136 TDMA" in 1997, IEEE 6th International Conference on Universal Personal Communications record bridging the way to 21st Century, Vol. 1, S. 53-57. In diesem Aufsatz wird vorgeschlagen, die Zuverlässigkeitswerte im Rahmen eines speziellen Detektionsverfahrens, nämlich im Rahmen kohärenter Maximum-Likelihood-Sequence-Estimation MLSE-Detektion auf die Varianz von weißem Gauß'schen Rauschen im Übertragungskanal zu normieren.

Die dort offenbarte Berechnungsvorschrift für normierte Zuverlässigkeitswerte basiert auf den aus der Wahrscheinlichkeitsrechnung abgeleiteten sog. Log-Likelihood-Verhältnissen, wonach sich Zuverlässigkeitswerte q[k] wie folgt berechnen lassen:

$$q[k] = \log\left(\frac{P(d[k]=1\,|\,r[k])}{P(d[k]=0\,|\,r[k])}\right) \text{ oder } q[k] = \log\left(\frac{p_e}{1-p_e}\right)$$

Dabei bezeichnen

P( ): Wahrscheinlichkeit des angegebenen Ereignisses
d[k]: binäres Informationssymbol im Zeittakt k
r[k]: empfangener abgetasteter Signalwert im Zeittakt k
$p_e$: Bitfehlerwahrscheinlichkeit

Beide oben angegebenen Darstellungen sind gleichwertig und ineinander überführbar. Dieses Zuverlässigkeitsmaß hat den Vorteil, dass die Werte im Faltungsdekodierer (Viterbi-Algorithmus) zur Bildung der Zweigmetriken einfach addiert werden können.

Ausgehend von diesem Stand der Technik ist es die Aufgabe der vorliegenden Erfindung, ein System, einen Empfänger und ein Verfahren der eingangs genannten Art, jeweils geeignet zur inkohärenten differentiellen Detektion, derart weiterzubilden, dass ein jeweils für ein einzelnes binäres Informationssymbol berechneter Zuverlässigkeitswert das oben definierte ideale Zuverlässigkeitsmaß approximiert.

Diese Aufgabe wird durch die Gegenstände der unabhängigen Patentansprüche 1 und 4 gelöst.

Der in Patentanspruch 1 beanspruchte Empfänger zeichnet sich dadurch aus, dass die Zuverlässigkeitswerte q[k] auf eine auf der Rauschleistung des Empfangssignals basierende Bezugsgröße normiert sind.

Dies hat den Vorteil, dass dadurch eine Degradation der Kanal-Dekodiereinrichtung im Empfänger bei Anwendung von Interleaving unterbleibt. Weiterhin hat es den Vorteil, dass die Zuverlässigkeitswerte mit minimaler Stufenzahl quantisiert werden können. Bei der Verwendung von Faltungscodes zur Kanalkodierung hat die Normierung der Zuverlässigkeitswerte außerdem den Vorteil, dass die im Faltungsdekodierer wiedergewonnenen Informationssymbole einen Gewinn im Signal-Rauschleistungsabstand von ca. 2 dB bei einem durch additives Weißes Gauß'sches Rauschen gestörten Kanal und von 2 - 5 dB bei Flat-Rayleigh- und Rice-Fadingkanälen gegenüber der Verwendung von nicht-normierten Zuverlässigkeitswerten erzielen.

Die Normierung von Zuverlässigkeitswerten bei der differentiellen Detektion verursacht vorteilhafterweise nur eine geringe Komplexitätserhöhung und auch nur einen geringen Implementierungsmehraufwand.

Die nach der in Patentanspruch 2 beanspruchten Formel berechneten Zuverlässigkeitswerte basieren auf den aus der Wahrscheinlichkeitsrechnung abgeleiteten sog. Log-Likelihood-Verhältnissen. Dies bietet für die Verarbeitung der Zuverlässigkeitswerte in dem Kanal-Dekodierer den Vorteil, dass sie dort mathematisch besonders einfach weiterverarbeitet werden können. Die Zuverlässigkeitswerte gemäß Patentanspruch 2 sind auf die Varianz der Rauschleistung des Empfangssignals normiert.

Die Aufgabe wird weiterhin durch ein Übertragungssystem, insbesondere ein Mobilfunksystem gelöst, wobei die für den Empfänger des Übertragungssystems vorgeschlagene Berechnungsweise zur Berechnung von Zuverlässigkeitswerten die gleichen Vorteile aufweist, wie sie oben für den beanspruchten Empfänger beschrieben wurden.

Schließlich wird die Aufgabe durch ein Verfahren gemäß Patentanspruch 4 gelöst, wobei für die in dem Verfahren beanspruchte Methode zur Berechnung der Zuverlässigkeitswerte wiederum die gleichen Vorteile zu nennen sind, wie sie oben bereits erwähnt wurden.

Der Beschreibung sind die folgenden Figuren beigefügt, wobei

Fig. 1    den Empfänger gemäß der Erfindung,

Fig. 2    den Gewinn im Bitfehlerverhältnis bei Verwendung von normierten gegenüber unnormierten Zuverlässigkeitswerten,

Fig. 3    den Gewinn im Rahmenfehlerverhältnis bei Verwendung von normierten gegenüber unnormierten Zuverlässigkeitswerten,

Fig. 4    bedingte Amplitudenverteilungsdichten des Empfangssignals bei einem durch additives Weißes Gauß'sches Rauschen gestörten zeitinvarianten Kanal,

Fig. 5    ein Diagramm zur Veranschaulichung der Berechnung von Zuverlässigkeitswerten bei DQPSK-modulierten Signalen, und

Fig. 6    ein Übertragungssystem mit DQPSK-Modulation und differentieller Detektion nach dem Stand der Technik, zeigt.

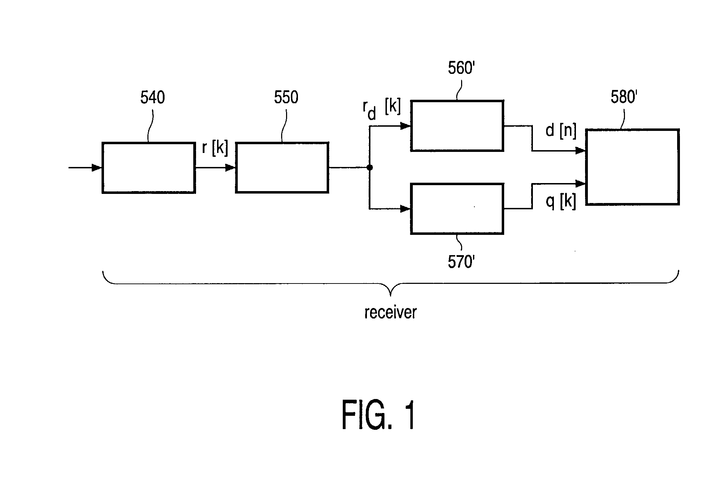

Es erfolgt eine detaillierte Beschreibung der Erfindung unter Bezugnahme auf die Fig. 1 bis 5.

Der erfindungsgemäße Empfänger gemäß Fig. 1 ist grundsätzlich ähnlich aufgebaut wie der in Fig. 6 beschriebene und aus dem Stand der Technik bekannte Empfänger 540-580. Unterschiede betreffen jedoch die Detektionseinrichtung 560, die Berechnungseinrichtung 570 und die Kanal-Dekodierungseinrichtung 580.

Die Detektionseinrichtung arbeitet gemäß der vorliegenden Erfindung nicht nach dem Prinzip der kohärenten MLSE-Detektion, sondern nach dem Prinzip der inkohärenten differentiellen Detektion.

Zur Unterscheidung von Einrichtungen nach dem Stand der Technik und erfindungsgemäßen Einrichtungen werden die Bezugszeichen der letzteren im folgenden durch ein "'" ergänzt.

In der erfindungsgemäßen Berechnungseinrichtung 570' werden die Zuverlässigkeitswerte q[n] auf Basis der differenzierten Signalwerte rd[k] mit

$$rd[k]=r[k]\cdot r*[k-1] \tag{1}$$

berechnet.

Falls erforderlich, werden die differentiellen Signalwerte rd[k] mit einem Drehfaktor multipliziert, der die unverrauschten Signalwerte rd[k] auf die +45°-Achsen der Signalebene drehen würde. Als Zuverlässigkeitsmaß q[n] wird für das niederwertige Informationsbit der Realteil von rd[k] und für das höherwertige Informationsbit der Imaginärteil von rd[k] verwendet, jeweils normiert auf die Rauschleistung $\sigma_c^2$ des komplexen

Empfangssignals r[k] und mit einer beliebigen Konstanten C, die vorzugsweise den Wert $\sqrt{2}$ besitzt:

$$q[2k] = C \cdot \frac{\mathrm{Re}\{r_{d[k]}\}}{\sigma_c^2} \qquad (2)$$

$$q[2k+1] = C \cdot \frac{\mathrm{Im}\{r_{d[k]}\}}{\sigma_c^2} \qquad (3)$$

Die oben definierten Zuverlässigkeitswerte q[k] stellen vorzeichenbehaftete Zahlenwerte dar, deren Vorzeichen die "harte" Binärentscheidung '0' bzw. '1' und deren Betrag die Zuverlässigkeit der Entscheidung repräsentiert. Wird die in Tabelle 1 angegebene Zuordnung zwischen den binären Informationssymbolen und Phasendifferenzwerten verwendet, so bedeutet ein negatives Vorzeichen eine '0' und ein positives Vorzeichen eine '1'. Ein niedriger Betragswert bedeutet im statistischen Mittel eine unsichere und ein hoher Betragswert eine sichere Entscheidung.

Die Normierung mit der Rauschleistung $\sigma_c^2$ setzt voraus, dass der Empfänger durch geeignete Maßnahmen in die Lage versetzt werden muss, die Rauschleistung zu schätzen. Ebenso muss der Empfänger in der Lage sein, aus dem Empfangssignal die Lage des optimalen Abtastzeitpunktes näherungsweise zu bestimmen. Ein in vielen Systemen üblicher Lösungsansatz besteht darin, bekannte Symbole (Trainingssequenz) in periodischen Zeitabständen in den zu übertragenden Datenstrom einzufügen. In zeitschlitzorienrierten TDMA-Systemen ist dafür im allgemeinen eine zusammenhängende Trainingssequenz im Zeitschlitzaufbau mit günstigen Korrelationseigenschaften vorgesehen.

Die Rauschleistung $\sigma_c^2$ lässt sich dann z.B. in der Weise schätzen, dass zunächst die resultierende Impulsantwort des Übertragungssystems z.B. nach der aus dem Stand der Technik bekannten Least-Squares-Methode aus der Trainingssequenz ermittelt wird, und anschließend das Empfangssignal innerhalb der Trainingssequenz durch Faltung der Impulsantwort mit der komplexwertigen Symbolfolge der Trainingssequenz rekonstruiert wird.

Die Mittelung über das Fehlersignal zwischen den tatsächlich empfangenen und den rekonstruierten Signalwerten ergibt dann einen Schätzwert für die Rauschleistung.

Die gemäß den Formeln (2) und (3) berechneten Zuverlässigkeitswerte werden der erfindungsgemäßen Kanal-Dekodiereinrichtung 580' zugeführt, welche unter Verwendung dieser normierten Zuverlässigkeitswerte kanalkodierte Informationssymbole d[n] zuverlässig dekodiert.

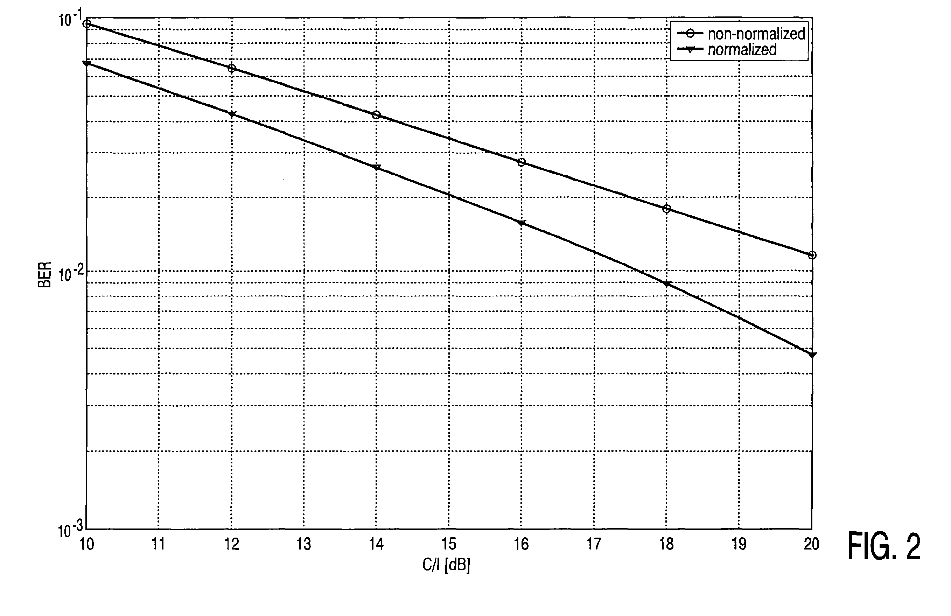

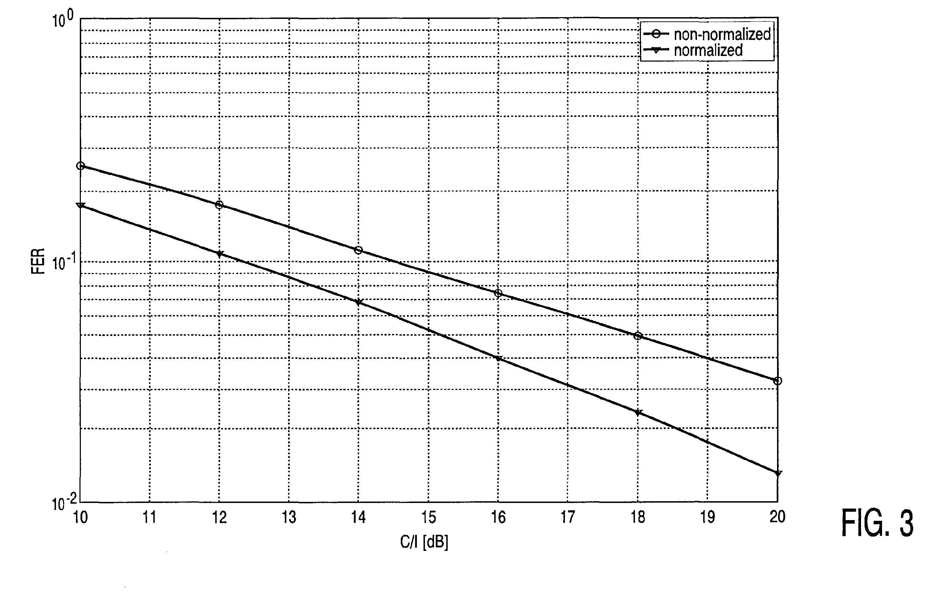

Die Verwendung der normierten Zuverlässigkeitswerte anstelle der unnormierten Zuverlässigkeitswerte erlaubt bei dem Einsatz fehlerkorrigierender Codes, insbesondere Faltungscodes, neben der DQPSK-Modulation eine Verbesserung der Qualität der dekodierten Informationssymbolfolgen nach der Kanaldekodierung. Diese verbesserte Qualität zeigt sich insbesondere in einer Vergrößerung des Signal-Störabstandes für die dekodierten Impulsfolgen. Die Fig. 2 und 3 veranschaulichen diesen Gewinnzuwachs bei der Verwendung von normierten gegenüber unnormierten Zuverlässigkeitswerten für Kanäle mit nicht frequenzselektivem Fading (Schwund) mit Gleichkanalinterferenz. Genauer gesagt, veranschaulicht Fig. 2 das verringerte Bitfehlerverhältnis bei vorgegebenem Träger-/Interferenzverhältnis während Fig. 3 das verringerte Rahmenfehlerverhältnis (Frame Error Ratio: FER) bei einem vorgegebenen Träger-/Interferenz-verhältnis (Carrier to interference ratio: C/I) veranschaulicht.

Es folgt nun eine theoretische Begründung für die Berechnung der Zuverlässigkeitswerte, wie sie in Patentanspruch 2 beansprucht werden.

Dazu wird in einem ersten Schritt ein einfaches binäres Übertragungssystem betrachtet, das den binären Informationssymbolen '0' und '1' die Amplitudenwerte -a0 und +a0 zuordnet. Vereinfachend soll gelten, dass die resultierende Impulsantwort des Übertragungssystems, die das Sendepulsformfilter, die Kanalimpulsantwort und das Empfangsfilter einschließt, eine Nyquistcharakteristik aufweist, d.h. im idealen Abtastraster sollen keine Intersymbolinterferenzen durch benachbarte Symbole auftreten. Als Rauschen soll additives weißes Gauß'sches Rauschen (AWGN) angenommen werden. Setzt man als Empfangsfilter ein Whitened-Matched-Filter voraus, so sind die im Symbolabstand Ts abgetasteten Rauschwerte ebenfalls statistisch unabhängig (weiß).

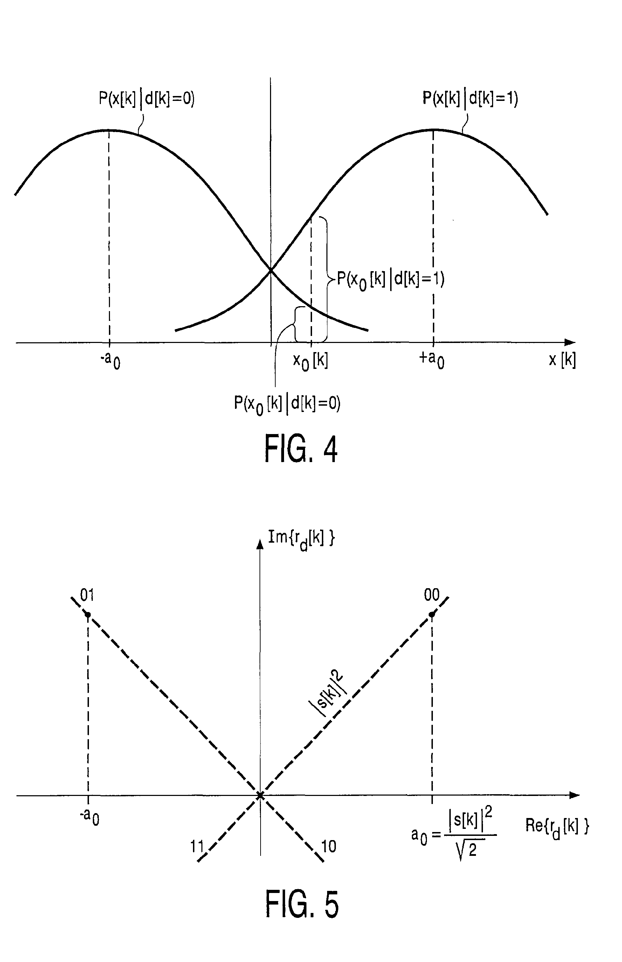

Betrachtet man nun das mit dem idealen Abtasttakt abgetastete Signal x[k] am Ausgang des Empfangsfilters 540, so können für die Amplitudenwerte entsprechend Fig. 4 folgende bedingten Amplitudenverteilungsdichte-fünktionen angegeben werden:

Verteilungsdichte unter der Annahme, dass eine '0' gesendet wurde:

$$P\left(x[k] \mid d[k]=0\right)=\frac{1}{\sigma_R\sqrt{2\pi}}\exp\left(-\frac{\left(x[k]+a_0\right)^2}{2\sigma_R^2}\right)$$

Verteilungsdichte unter der Annahme, dass eine '1' gesendet wurde:

$$P\left(x[k] \mid d[k]=1\right)=\frac{1}{\sigma_R\sqrt{2\pi}}\exp\left(-\frac{\left(x[k]-a_0\right)^2}{2\sigma_R^2}\right)$$

Hierin sind

$\sigma_R^2$ : Rauschleistung des reellen Empfangssignals
d[k]: binäres Informationssymbol im Zeittakt k
x[k]: empfangener abgetasteter reeller Signalwert im Zeittakt k
a0 : unverrauschte Empfangsamplitude

In Fig. 4 ist veranschaulicht, mit welcher Wahrscheinlichkeit ein empfangener, zum Zeitpunkt k abgetasteter reeller Signalwert x[k] auftritt unter der Bedingung, dass das gesendete binäre Informationssymbol, welches mit einem bipolaren Modulationsverfahren moduliert worden ist, entweder eine '0' oder '1' war. Hat beispielsweise die Amplitude des im Zeitpunkt k abgetasteten empfangenen Signals den Wert X0[k], so beträgt dafür die Wahrscheinlichkeit P (X0 [k] |d[k] = 0), wenn eine binäre β gesendet wurde. Andererseits beträgt die Wahrscheinlichkeit dafür P(X0[k]| d[k] = 1), wenn eine binäre 1 gesendet wurde.

Als Zuverlässigkeitsmaß q[k] sollen Log-Likelihood-Verhältniswerte dienen:

$$q[k]=\log\left(\frac{P(d[k]=1|x[k]}{P(d[k]=0|x[k]}\right)$$

Mit Hilfe der Identität

$$P(A,B) = P(A|B)\cdot P(B)=P(B|A)\cdot P(A) \text{ bzw. } P\langle A|B\rangle = P\langle B|A\rangle \times \frac{P(A)}{P(B)}$$

lässt sich das Zuverlässigkeitsmaß umformen in:

$$q[k]=\log\left(\frac{P\left(x[k]|d[k]=1\right)\cdot P(d[k]=1)}{P\left(x[k]|d[k]=0\right)\cdot P(d[k]=0)}\right)=\log\left(\frac{P\left(x[k]|d[k]=1\right)}{P\left(x[k]|d[k]=0\right)}\right)+\log\left(\frac{P(d[k]=1)}{P(d[k]=0)}\right)$$

Unter der Annahme gleichwahrscheinlicher binärer Informationssymbole fällt der zweite Term weg und es bleibt nach einigen Umformungen:

$$q[k] = \log\left(\frac{P(x[k]|d[k]=1)}{P(x[k]|d[k]=0)}\right) = 2 \cdot \frac{a_0}{\sigma_R^2} \cdot x[k]$$

Hierin ist $\alpha_0^2/\sigma_R^2$ das mittlere Signal-Rauschleistungsverhältnis (S/N), das die mittlere Bitfehlerwahrscheinlichkeit bestimmt.

Dieses Ergebnis soll nun auf den Fall der differentiellen Detektion eines DQPSK-modulierten Empfangssignals übertragen werden (s. Fig. 5). Die nach dem Empfangsfilter im Symbolabstand Ts abgetasteten komplexen Signalwerte seien mit r[k] bezeichnet und bestehen aus dem unverrauschten Signalwert s[k] und dem Rauschwert n[k]:

$$r[k] = s[k] + n[k]$$

Nach der Differentiation erhält man die Signalwerte rd[k] gemäß:

$$
\begin{aligned}
rd[k] \quad &= r[k]\cdot r^*[k\text{-}1] = (s[k]+n[k])\cdot(s^*[k\text{-}1]+n^*[k\text{-}1]) \\
&= s[k]\cdot s^*[k\text{-}1]+s[k]\cdot n^*[k\text{-}1]+n[k]\cdot s^*[k\text{-}1]+n[k]\cdot n^*[k\text{-}1] \\
&= sd[k]+nd[k]
\end{aligned}
$$

Hierin ist sd[k] der ideale unverrauschte Signalwert und nd[k] der Rauschwert jeweils nach der Differentiation:

$$sd[k] = s[k]\cdot s^*[k\text{-}1]$$

$$nd[k] = s[k]\cdot n^*[k\text{-}1]+n[k]\cdot s^*[k\text{-}1]+n[k]\cdot n^*[k\text{-}1]$$

Die Rauschleistung $\sigma_d^2$ nach der Differentiation für den zeitinvarianten AWGN-Kanal ergibt sich somit zu:

$$
\begin{aligned}
\sigma_d^2 &= E\left\{\left|s[k]\cdot n^*[k-1] + n[k]\cdot s^*[k-1] + n[k]\cdot n^*[k-1]\right|^2\right\} \\
&= 2 * \left|s[k]\right|^2 * \sigma_c^2 + \sigma_c^4
\end{aligned}
$$

Unter der Voraussetzung, dass die Rauschleistung $\sigma_c^2$ in der Regel deutlich kleiner als die Signalleistung ist, erhält man für die Rauschleistung nach der Differentiation näherungsweise:

$$\sigma_d^2 \approx 2\cdot|s[k]|^2\cdot\sigma_c^2$$

Betrachtet man nun die Bitentscheidung unter der Voraussetzung, dass die unverrauschten Signalwerte $s_d[k]$ auf den $\pm45°$-Achsen im Signalraum liegen ($\pi/4$-DQPSK), so ergeben sich die Verhältnisse gemäß Fig. 5. $a_0$ kann substituiert werden durch

$$\frac{1}{\sqrt{2}}\cdot|s[k]|^2,\ \sigma_R^2 \text{ durch } \sigma_d^2/2$$

(reeller Rauschleistungsanteil) und x[k] durch Re{rd[k]} bzw. Im{rd[k]}, so dass man schließlich als Zuverlässigkeitswerte für die beiden binären Informationssymbole eines Quaternärsymbols folgende Ausdrücke erhält:

$$q[2k] = 2 \cdot \frac{a_0}{\sigma_R^2} \cdot x[k] = 2 \cdot \frac{|s[k]|^2 \cdot \mathrm{Re}\{r_d[k]\}}{\sqrt{2} \cdot |s[k]|^2 \cdot \sigma_c^2} = \sqrt{2} \cdot \frac{\mathrm{Re}\{r_d[k]\}}{\sigma_c^2}$$

$$q[2k+1] = \sqrt{2} \cdot \frac{\mathrm{Im}\{r_d[k]\}}{\sigma_c^2}$$

Als näherungsweise optimale Zuverlässigkeitswerte ergeben sich demnach der Real- bzw. Imaginäranteil der differentiellen Signalwerte, normiert mit der Rauschleistung des komplexen Signals vor der Differentiation.

**Patentansprüche**

1. Empfänger zum Empfangen eines Empfangssignals, welches nach dem Prinzip der differentiellen quaternären Phasenumtastung DQPSK modulierte und zusätzlich kanaldodierte Informationssymbole r[k] nach deren Übertragung über einen Kanal (530) aufweist, mit

   einer Empfangseinrichtung (540) zum Empfangen des Empfangssignals,
   einem Phasendetektor (550) zum Ermitteln der Phasendifferenz zwischen zwei aufeinanderfolgenden Informationssymbolen r[k],
   einer Detektionseinrichtung (560') zum Erzeugen demodulierter Informationssymbole d[n] durch inkohärente differentielle Detektion des Empfangssignals auf Basis der ermittelten Phasendifferenz,
   einer Berechnungseinrichtung (570') zum Berechnen von Zuverlässigkeitswerten q[k] für die einzelnen demodulierten aber noch kanalkodierten Informationssymbole d[n] auf Basis der ermittelten Phasendifferenz, und
   einer Kanal-Dekodiereinrichtung (580') zum Dekodieren der kanalkodierten Informationssymbole d[n] unter Berücksichtigung der berechneten Zuverlässigkeitswerte q[k];

   **dadurch gekennzeichnet**,
   dass die Zuverlässigkeitswerte q[k] auf eine auf der Rauschleistung des Empfangssignals basierende Bezugsgröße normiert sind.

2. Empfänger nach Anspruch 1,
   **dadurch gekennzeichnet**,

   dass die Berechnungseinrichtung (570') die Zuverlässigkeitswerte q[k] wie folgt aus zwei aufeinanderfolgenden empfangenen
   Informationssymbolen r[k-1], r[k] berechnet:

$$q[2k] = C \cdot \frac{\mathrm{Re}\{r_{d[k]}\}}{\sigma_c^2}$$

   und

$$q[2k+1] = C \cdot \frac{\mathrm{Im}\{r_{d[k]}\}}{\sigma_c^2}$$

   mit $r_d[k] = r[k]\, r^*[k-1]$, wobei $r^*[k]$ das konjugiert komplexe Informationssymbol zu r[k] bezeichnet,
   mit C = konstant und
   mit $\sigma_c^2$ gleich der Rauschleistung des Empfangssignals.

3. Übertragungssystem, insbesondere Mobilfunksystem, mit einem Sender (510, 520) zum Aussenden von nach dem Prinzip der differentiellen quaternären Phasenumtastung DQPSK modulierten und zusätzlich kanaldodierten Informationssymbolen über einen Kanal 530, und
   dem Empfänger gemäß Anspruch 1 oder 2.

4. Verfahren zum Dekodieren eines Empfangssignals, welches nach dem Prinzip der differentiellen quaternären Phasenumtastung DQPSK modulierte und zusätzlich kanalkodierte Informationssymbole r[k] aufweist, mit folgenden Schritten:

Empfangen des Empfangssignals nach dessen Übertragung über den Kanal (530) eines Übertragungssystems,

Berechnen eines Zuverlässigkeitswertes q[k] für den logischen Pegel jedes empfangenen Informationssymbols r[k], und

Demodulieren der Informationssymbole r[k] nach dem Prinzip der inkohärenten differentiellen Detektion und Erzeugen demodulierter, aber noch kanalkodierter Informationssymbole d[n], und

Dekodieren der kanalkodierten Informationssymbole d[n] unter Berücksichtigung der berechneten Zuverlässigkeitswerte q[k],

**dadurch gekennzeichnet**,

dass die Zuverlässigkeitswerte q[k] auf eine auf der Rauschleistung des Empfangssignals basierende Bezugsgröße normiert sind.

FIG. 1

FIG. 2

FIG. 3

EP 1 130 867 A2

FIG. 4

FIG. 5

FIG. 6

EP 1 130 867 A2